# EUROPÄISCHE PATENTANMELDUNG

(11) **EP 2 674 628 A1**
(43) Veröffentlichungstag der Anmeldung: **18.12.2013**
(21) Anmeldenummer: 13002933.3
(22) Anmeldetag: 06.06.2013
(51) Int. Cl.: F16B 2/06

(54) **Klemmvorrichtung**

(30) Priorität: 11.06.2012 DE 102012011364
(71) Anmelder: Otto Bock HealthCare GmbH, 37115 Duderstadt (DE)
(72) Erfinder: Schilling, Matthias, 37345 Weißenborn-Lüderode (DE); Lürssen, Marcus, 37073 Göttingen (DE)
(74) Vertreter: Stornebel, Kai

(57) **Zusammenfassung**

Die Erfindung betrifft eine Klemmvorrichtung mit einem ersten Klemmteil (10) und einem zweiten Klemmteil (20), zwischen denen ein Freiraum (30) zur Aufnahme eines zu klemmenden Objektes (6) und ein Klemmspalt (120) ausgebildet ist, sowie zumindest einer Klemmschraube (40), über die die Klemmteile (10, 20) zueinander verlagerbar sind, wobei in dem ersten Klemmteil (10) die Klemmschraube (40) in einer Durchgangsbohrung (12) geführt ist und in dem zweiten Klemmteil (20) ein zu der Klemmschraube (40) korrespondierendes Gewinde (22) vorgesehen ist, wobei die Durchgangsbohrung (12) in einer verlagerbar in dem ersten Klemmteil (10) gelagerten Buchse (50) ausgebildet ist.

## Beschreibung

Die Erfindung betrifft eine Klemmvorrichtung mit einem ersten Klemmteil und einem zweiten Klemmteil, zwischen denen ein Freiraum zur Aufnahme eines Klemmobjektes und ein Klemmspalt ausgebildet ist sowie zumindest einer Klemmschraube, über die die Klemmteile zueinander verlagerbar sind, wobei in dem ersten Klemmteil die Klemmschraube in einer Durchgangsbohrung geführt ist und in dem zweiten Klemmteil ein zu der Klemmschraube korrespondierendes Gewinde vorgesehen ist.

Klemmvorrichtungen werden eingesetzt, um Objekte miteinander zu verbinden, aneinander festzulegen oder die Klemmvorrichtung selbst an einem Objekt zu befestigen, beispielsweise um Anschläge auszubilden oder Anschlusseinrichtungen an dem zu klemmenden Objekt installieren zu können.

Um Regenrinnen an Häuserwänden beabstandet und sicher festlegen zu können, sind Schellen bekannt, bei denen ein erstes Schellenteil eine im Wesentlichen halbkreisförmige Ausgestaltung mit einem Zapfen zum Festlegen an einem Mauerwerk aufweist. An diesem ersten Schellenteil ist an einem ersten Ende des halbkreisförmigen Bogens ein Scharnier und auf der gegenüberliegenden Seite ein Gewinde vorgesehen. In dem Scharnier ist ein ebenfalls halbkreisförmiges zweiten Schellenteil schwenkbar gelagert, an dem der Lagerstelle gegenüberliegenden Ende des zweiten Schellenteils ist eine Aufnahme, in der Regel ein Gewinde für eine Flügelschraube, vorgesehen.

An Rohr- und Schienensystemen, insbesondere aus empfindlichen Materialien, besteht mitunter die Notwendigkeit, zusätzliche Komponenten nachträglich anzubringen. Dazu werden offene oder geschlossene Klemmschellen eingesetzt. Bei geschlossenen Klemmschellen besteht das Problem, dass die Spannschrauben sich verbiegen und starke Verspannungen auftreten. Bei offenen Klemmschellen muss die Druckplatte für die jeweilige Anwendungsstelle speziell gefertigt werden, eine vielseitige Anwendung war daher nicht möglich.

Aufgabe der vorliegenden Erfindung ist es, eine Klemmvorrichtung bereitzustellen, mit der es möglich ist, insbesondere auch bei offenen Klemmschellen, ein variables Widerlager zu bilden und Fertigungstoleranzen auszugleichen.

Erfindungsgemäß wird diese Aufgabe durch eine Vorrichtung mit den Merkmalen des Hauptanspruches gelöst. Vorteilhafte Ausgestaltungen und Weiterbildungen der Erfindung sind in den Unteransprüchen aufgeführt.

Die erfindungsgemäße Klemmvorrichtung mit einem ersten Klemmteil und einem zweiten Klemmteil, zwischen denen ein Freiraum zur Aufnahme eines zu klemmenden Objektes und ein Klemmspalt ausgebildet ist, sowie zumindest einer Klemmschraube, über die die Klemmteile zueinander verlagerbar sind, wobei in dem ersten Klemmteil die Klemmschraube in eine Durchgangsbohrung geführt ist und in dem zweiten Klemmteil ein zu der Klemmschraube korrespondierendes Gewinde vorgesehen ist, sieht vor, dass die Durchgangsbohrung in einer verlagerbar in dem ersten Klemmteil gelagerten Buchse ausgebildet ist. Durch die verlagerbare Ausgestaltung der Buchse ist es möglich, die Durchgangsbohrung in Richtung auf das zweite Klemmteil zu verlagern, so dass ein einstellbares Widerlager an dem ersten Klemmteil für das zweite Klemmteil vorhanden ist. Dadurch ist es möglich, eine Klemmvorrichtung oder eine Klemmschelle an verschiedenen Objekten oder an verschiedenen Stellen des zu klemmenden Objektes einzusetzen, ohne dass eine individuelle Fertigung notwendig ist. Dies führt zu einer Einsparung von Arbeitszeit bei der Fertigung der Klemmvorrichtung sowie bei der Montage der Klemmvorrichtung an dem zu klemmenden Objekt. Ebenfalls ist es möglich, eine Klemmung auch an empfindlichen Objekten vorzunehmen, bei denen es notwendig ist, dass die Klemmteile zueinander nicht verkanten, sondern möglichst definiert und plan einander gegenüberliegen.

Eine Weiterbildung der Erfindung sieht vor, dass die Buchse in Längserstreckung der Klemmschraube verlagerbar an dem ersten Klemmteil angeordnet ist, um einen Abstandsausgleich der Klemmteile zueinander zu ermöglichen. Dadurch wird die Größe des Klemmspaltes variabel, wodurch eine angepasste Anlage der Klemmteile an das zu klemmende Objekt eingestellt werden kann. Eine vorteilhafte Ausgestaltung der Verlagerbarkeit ist gegeben, wenn die Buchse ein Außengewinde aufweist, das in ein korrespondierendes Innengewinde in dem ersten Klemmteil eingreift. Dadurch ist es möglich, durch Verdrehen der Buchse den Klemmspalt zu verändern, also bei Bedarf zu vergrößern oder zu verkleinern. Durch die Wahl eines Feingewindes ist es möglich, eine sehr präzise Einstellung zu erreichen.

Um die Einstellung der Buchse zu ermöglichen bzw. zu erleichtern, sind in einer Ausgestaltung der Erfindung an der Buchse Formschlusselemente ausgebildet oder angeordnet, über die mittels eines Werkzeuges die Verstellung bewirkt werden kann.

Die Formschlusselemente können beispielsweise als Schlitze oder als Vertiefungen für Innensechskantschlüssel oder dergleichen ausgebildet sein.

Die Buchse bildet ein Widerlager für die Klemmung, sobald sie über das erste Klemmteil hinaussteht und in den Klemmspalt zwischen den beiden Klemmteilen hineinragt. Dadurch ist es möglich, statt separater Klemmteile oder einzeln anzufertigender Distanzscheiben die Buchse in den Klemmspalt hineinragen zu lassen, um ein dynamisches, also verstellbares Widerlager für die beiden Klemmteile bereitzustellen. Die Klemmteile können separat voneinander ausgebildet sein, so dass eine relativ einfache Montage gegeben ist. Alternativ dazu ist die Klemmvorrichtung einteilig ausgebildet und muss durch Aufbiegen an den jeweiligen Querschnitt des zu klemmenden Objektes angepasst werden.

An der dem zweiten Klemmteil zugewandten Stirnseite der Buchse ist eine Oberfläche ausgebildet, die zu der gegenüberliegenden Oberfläche des zweiten Klemmteils angepasst ist. Dadurch ist es möglich, dass die Buchse möglichst großflächig auf dem zweiten Klemmteil aufliegt und eine sichere Zuordnung des Widerlagers, das durch die Buchse gebildet wird, gewährleistet ist.

Neben einer Längsverlagerbarkeit der Buchse innerhalb des ersten Klemmteils ist es möglich, dass diese auch in einem geringen Maße verschwenkbar an dem ersten Klemmteil gelagert ist, um bei einem Winkelversatz oder einer aufgebogenen, einstückigen Klemmvorrichtung eine sichere und möglichst vollflächige Anlage der Buchse an dem zweiten Klemmteil ermöglichen zu können.

An zumindest einem der Klemmteile ist ein Anschlusselement oder eine Befestigungseinrichtung für ein Anschlusselement angeordnet oder ausgebildet, so dass über diese Klemmvorrichtung zusätzliche Komponenten an dem zu klemmenden Objekt befestigt werden können.

An der Buchse und dem ersten Klemmteil ist jeweils zumindest eine Markierung angeordnet, über die die Stellung der Buchse relativ zu dem ersten Klemmteil ablesbar ist. Beispielsweise kann eine Skala an der Buchse und/oder dem ersten Klemmteil angeordnet sein, der einer korrespondierende Zeigeeinrichtung zugeordnet ist, so dass leicht erkannt werden kann, um wieviel eine Verstellung oder Verlagerung der Buchse, ausgehend von einem Ausgangszustand, erfolgt ist.

Die Buchse kann mit einer Rändelung versehen sein, die über das erste Klemmteil hinaussteht, so dass auch ohne Werkzeug eine leichte Verstellung durch Verdrehen der Buchse über die Rändelung an dem äußeren Umfang, beispielsweise eines verbreiterten Buchsenkopfes, die Verstellung erfolgt.

Nachfolgend werden Ausführungsbeispiele der Erfindung anhand der beigefügten Figuren näher erläutert. Es zeigen.
- Figur 1 -: eine Querschnittsansicht durch eine Klemmvorrichtung gemäß dem Stand der Technik;
- Figur 2 -: eine Querschnittsansicht durch eine erfindungsgemäße Klemmvorrichtung;
- Figur 2a -: eine Variante der Figur 2;
- Figur 3 -: eine Variante der Erfindung für eckige Querschnitte;
- Figur 4 -: eine Variante der Erfindung für runde Querschnitte,
- Figur 5 -: Einzeldarstellungen einer Buchse;
- Figur 5a -: eine Variante der Figur 5; sowie
- Figuren 6a - 6d -: Draufsichten auf eine Vorrichtung gemäß Figur 2a.

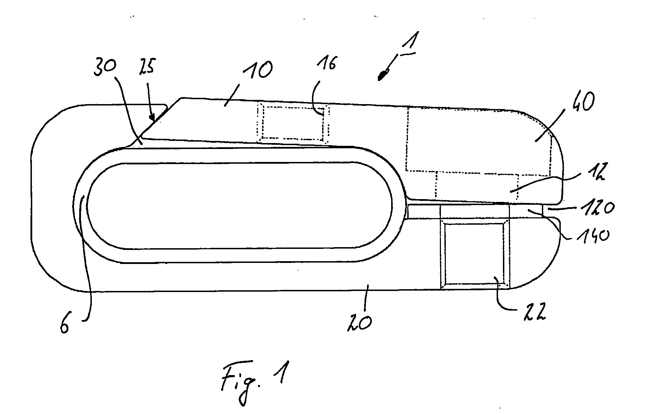

In der Figur 1 ist eine Klemmvorrichtung 1 mit einem ersten Klemmteil 10 und einem zweiten Klemmteil 20 dargestellt. Zwischen den beiden Klemmteilen 10, 20 ist ein Freiraum 30 ausgebildet, in dem ein zu klemmendes Objekt 6, im dargestellten Beispiel eine Schiene mit einem geschlossenen Hohlquerschnitt, aufgenommen ist. In dem ersten Klemmteil 10 ist oberhalb des zu klemmenden Objektes 6 eine Durchgangsbohrung mit einer Befestigungseinrichtung 16 in Gestalt eines Gewindes vorgesehen, um ein nicht dargestelltes Anschlusselement an dem ersten Klemmteil 10 zu befestigen. Ebenfalls ist in dem ersten Klemmteil 10 eine Durchgangsbohrung 12 am Ende eines Aufnahmebereiches angeordnet, durch die eine Befestigungsschraube 40 hindurchgeführt ist. Die Befestigungsschraube 40 stützt sich auf einem Absatz neben der Durchgangsbohrung 12 auf dem ersten Klemmteil 10 ab.

Das zweite Klemmteil 20 weist eine Ausnehmung auf, die zur Aufnahme des zu klemmenden Objektes 6, vorliegend einer im Wesentlichen oval ausgebildeten Schiene, ausgebildet ist. Neben der Ausnehmung ist ein Gewinde 22 in dem zweiten Klemmteil 20 ausgebildet, in das die Klemmschraube 40 eingeschraubt ist, um das erste Klemmteil 10 in Richtung auf das zweite Klemmteil 20 vorzuspannen und dadurch das zu klemmende Objekt 6 zwischen den beiden Klemmteilen 10, 20 einzuklemmen und zu fixieren. Im Bereich der Klemmschraube 40 ist ein Klemmspalt 120 ausgebildet, über den es möglich ist, eine Relativverlagerung des ersten Klemmteils 10 relativ zu dem zweiten Klemmteil 20 zu ermöglichen. Die Klemmvorrichtung 1 ist als offene Klemmschelle ausgebildet, so dass zwischen den beiden Klemmteilen 10, 20 ein Trennspalt 5 ausgebildet ist.

Innerhalb des Klemmspaltes 120 ist eine Unterlegscheibe 140 angeordnet, über die es möglich ist, die Größe des Freiraumes zwischen den beiden Klemmteilen 10, 20 im Bereich des Klemmspaltes 120 zu variieren. Der Figur 1 ist zu entnehmen, dass bei einer unpräzisen Dimensionierung der Unterlegscheibe 140 ein Verkanten des ersten Klemmteils 10 relativ zu dem zweiten Klemmteil 20 erfolgt, wodurch es zu einem suboptimalen Kraftschluss der Klemmteile 10, 20 an dem zu klemmenden Objekt 10 kommt. Es werden Biegekräfte auf die Klemmschraube 40 ausgeübt, ebenso wird eine ungleichmäßige Belastung auf das zu klemmende Objekt 6 bewirkt.

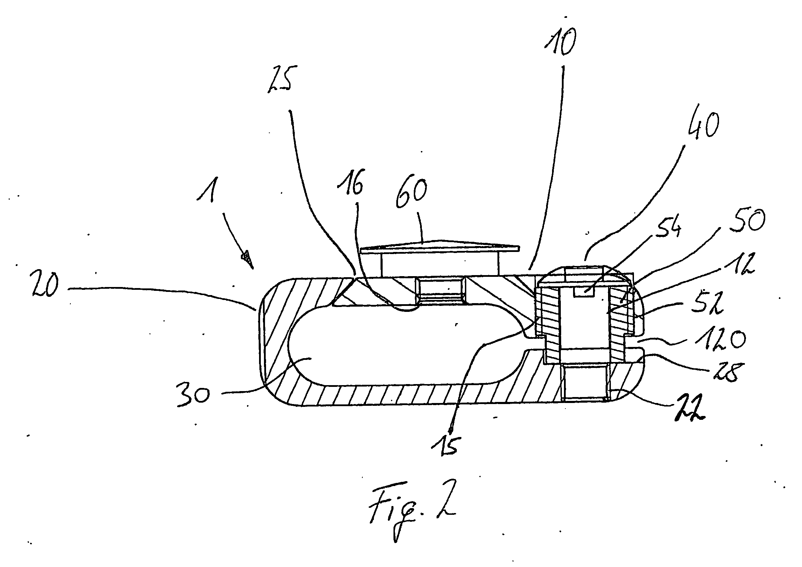

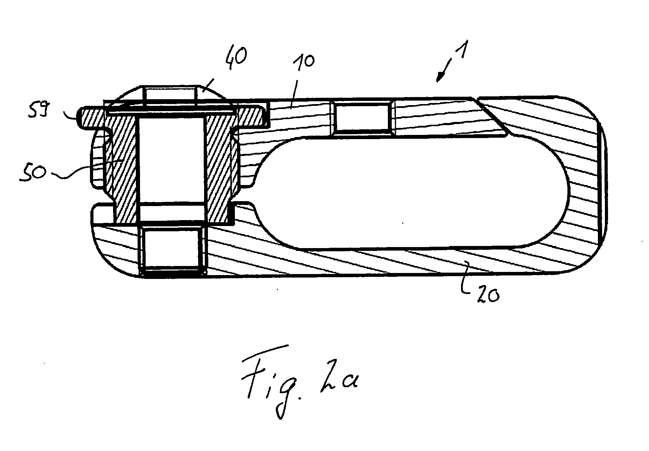

In der Figur 2 ist eine erfindungsgemäße Ausgestaltung der Klemmvorrichtung 1 ohne eingeklemmtes Objekt dargestellt. Der grundsätzliche Aufbau der Klemmvorrichtung 1, die als Klemmschelle ausgebildet ist, entspricht im Wesentlichen dem Aufbau gemäß Figur 1. Das obere Klemmteil 1 ist als Teilschale ausgebildet und ergänzt das untere Klemmteil 20, so dass der Freiraum 30 zur Aufnahme des zu klemmenden Objekts im Wesentlichen vollständig umschlossen wird. Ein Trennspalt 25 ist zwischen dem ersten Klemmteil 10 und dem zweiten Klemmteil 20 ausgebildet. An dem dem Trennspalt 25 gegenüberliegenden Ende des ersten Klemmteils 10 ist die Klemmschraube 40 angeordnet. Der Trennspalt 25 verläuft schräg zur Längserstreckung der Klemmschraube 40, so dass eine Verlagerung des ersten Klemmteils 10 von dem zweiten Klemmteil 20 weg in Richtung der Längserstreckung der Klemmschraube 40 nur bei einer gleichzeitigen Verlagerung senkrecht zur Längserstreckung der Klemmschraube 40 erfolgen kann. In dem ersten Klemmteil 10 ist eine Bohrung mit einem Innengewinde 15 ausgebildet, in das eine Buchse 50 mit einem korrespondierenden Außengewinde 52 eingeschraubt ist. Innerhalb der Buchse 50 ist die Durchgangsbohrung 12 ausgebildet, durch die die Klemmschraube 40 hindurchgeführt ist und in das Innengewinde 22 des zweiten Klemmteils 20 eingreift. Die Buchse 50 weist an dem zweiten Klemmteil zugeordneten Ende einen Absatz und eine Stirnseite auf, die einer Oberfläche 28 des zweiten Klemmteils korrespondierend ausgebildet ist. Im vorliegenden Ausführungsbeispiel sind die Stirnseite der Buchse 50 und die Oberfläche 28 des zweiten Klemmteils eben oder plan ausgebildet, so dass sich eine vollflächige Anlage der Stirnseite 58 auf der Oberfläche 28 ergibt. Die Oberfläche 28 des zweiten Klemmteils 20 ist beispielsweise mittels eines Fräsers bearbeitet, so dass sich ein Absatz ausbildet, der zwischen dem Freiraum 30 und der Buchse 50 angeordnet ist.

Zwischen dem ersten Klemmteil 10 und dem zweiten Klemmteil 20 ist der Klemmspalt 120 ausgebildet, der durch ein Verdrehen der Buchse 50 innerhalb des Innengewindes 15 verändert werden kann. Je weiter die Buchse 50 über Formschlusselemente 54 mit einem Werkzeug in Richtung auf das zweite Klemmteil 20 verlagert wird, desto größer wird der Klemmspalt 120, wird die Buchse 50 in die andere Richtung gedreht, verkleinert sich der Klemmspalt 120.

An dem ersten Klemmteil 10 ist die Befestigungseinrichtung 16 in Gestalt eines Innengewindes für ein eingeschraubtes Anschlusselement 60 ausgebildet. An dem Anschlusselement 60 können unterschiedliche Komponenten leicht befestigt werden, um eine Verbindung mit dem nicht dargestellten zu klemmenden Objekt, beispielsweise eine Schiene, zu ermöglichen.

Durch die in ihrer Relativposition zu dem ersten Klemmteil 10 verlagerbar gestaltete Buchse 50 ist es möglich, eine Veränderung des Klemmspaltes 120 zu erreichen, so dass ein Widerlager über die Stirnseite der Buchse 50 auf der korrespondierend ausgebildeten Oberfläche 28 des zweiten Klemmteils 20 realisiert wird. Das Innengewinde 15 und das Außengewinde 52 sind vorzugsweise als Feingewinde ausgestaltet, um eine Feineinstellung der Buchse 50 zu ermöglichen, so dass exakt eingestellt werden kann, wie weit die Buchse 50 in den Klemmspalt 120 hineinragt, um eine möglichst optimale Klemmung des Objektes zu ermöglichen. Über die einstellbare Buchse 50 ist insbesondere eine Verschiebung der Klemmvorrichtung 1 auf dem zu klemmenden Objekt bei gebogenen Konturen möglich, ohne dass separate Unterlegscheiben vorgesehen sein müssen, vielmehr ist lediglich ein Verdrehen der Buchse 50 in die jeweilige Richtung notwendig, was leicht und mit wenig Aufwand erfolgen kann.

In der Figur 2a ist eine Variante der Figur 2 dargestellt, bei der statt über Formschlusselemente 54 innerhalb der Buchse 50 eine Verstellung der Höhenlage und damit des Widerlagers, das durch die Buchse 50 gebildet wird, über eine Rändelung 59 verstellt werden. Die Rändelung 59 ist an einem Absatz angeordnet, der seitlich über das erste Klemmteil 10 hinaussteht, so dass eine leichte Einstellbarkeit gewährleistet ist.

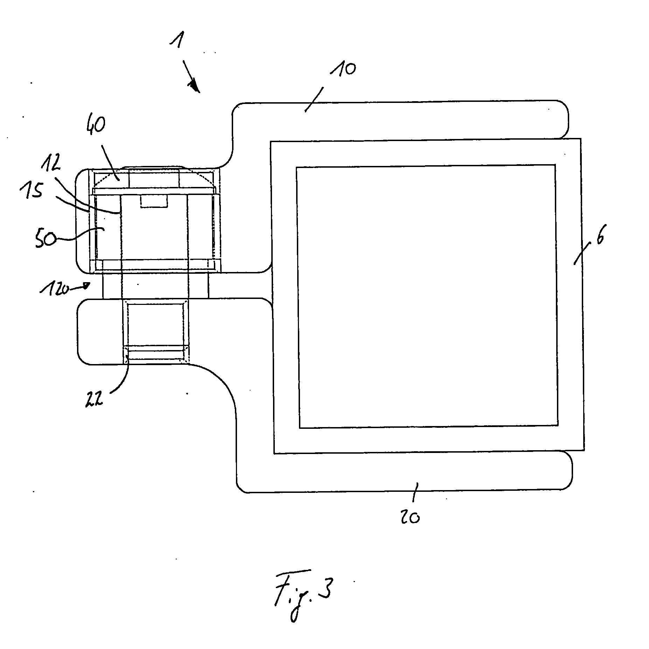

In der Figur 3 ist eine Variante der Klemmvorrichtung 1 dargestellt, bei der die Klemmteile im Wesentlichen gleich gestaltet ausgebildet sind. In dem ersten Klemmteil 10 ist die Buchse 50 in dem Innengewinde 15 und die Klemmschraube 40 in der Durchgangsbohrung 12 geführt und greift in das korrespondierende Innengewinde 22 im zweiten Klemmteil ein. Die Klemmteile 10, 20 sind anders als in der Ausführungsform gemäß der Figur 2 nicht als das zu klemmende Objekt 6 vollständig umschließende Klemmschalen ausgebildet, sondern als eine offene Klemmvorrichtung, die das zu klemmende Objekt 6, das einen eckigen Querschnitt aufweist, an drei Seiten umfasst und an einander gegenüberliegenden Seiten klemmt.

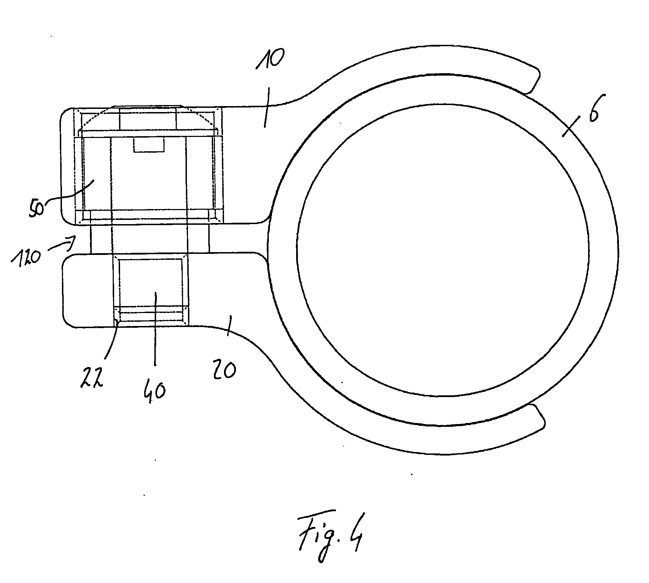

Eine weitere Variante der Erfindung ist in der Figur 4 dargestellt, bei der statt einer nahezu geschlossenen Umgreifung des zu klemmenden Objektes 6 nur eine teilweise Umgreifung des Objektes 6 mit kreisförmigem Querschnitt vorgesehen ist. Auf der dem Klemmspalt 12 gegenüberliegenden Seite des zu klemmenden Objektes 6 ist ein Freiraum ausgebildet, so dass die der Klemmschraube 40 gegenüberliegenden Enden der Klemmteile 10, 20 einander nicht berühren. Durch die Verstellbarkeit der Buchse 50 und die dadurch mögliche Einstellung der Klemmspaltweite kann eine Anpassung an das zu klemmende Objekt schnell und einfach erfolgen.

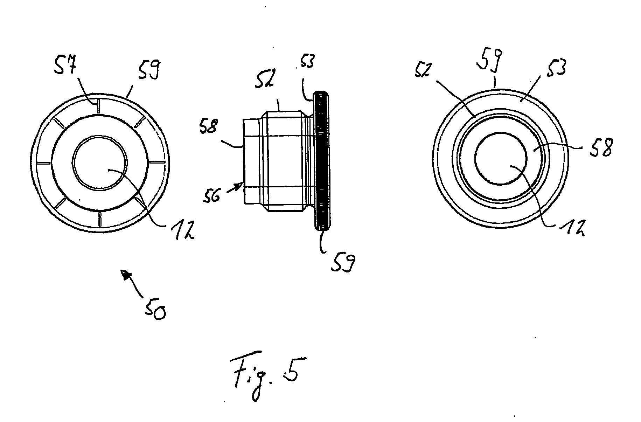

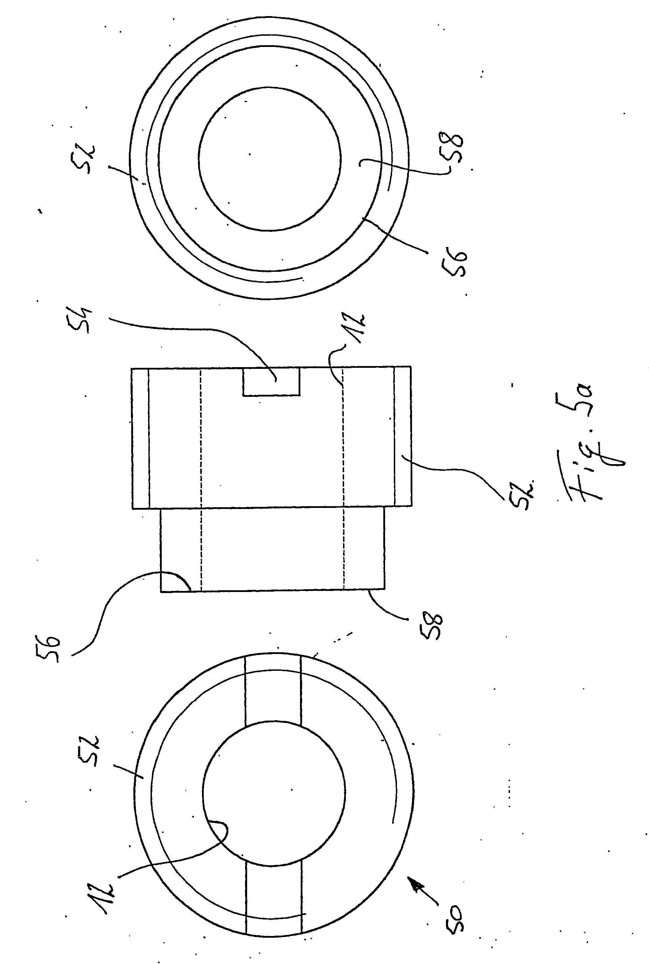

In der Figur 5 ist eine Buchse 50 in Einzeldarstellung in verschiedenen Ansichten gezeigt. Die linke Darstellung zeigt eine Draufsicht auf die Buchse 50, in der zentrisch die Durchgangsbohrung 12 zu erkennen ist. Auf der Oberseite der einschraubbaren Buchse 50 sind Markierungen 57 aufgebracht, um eine verbesserte Einstellbarkeit der Buchse zu ermöglichen und eine bessere Erkennbarkeit der Stellung der Buchse 50 relativ zu dem ersten Klemmteil 10 erreichen zu können.

Die mittlere Darstellung zeigt eine 90° gedrehte Seitenansicht der Buchse 50. Es ist die ebene Stirnseite 58 der Buchse 50 mit einer ebenen Oberfläche 56 zu erkennen. Ein Außengewinde 52, vorzugsweise ein Feingewinde, ist ebenfalls zu erkennen. Zur Stirnseite 58 hin weist die Buchse einen im Vergleich zum Außendurchmesser des Außengewindes 52 verringerten Durchmesser auf, auf der der Stirnseite 58 abgewandten Seite des Außengewindes 52 ist ein Absatz 53 ausgebildet, dessen Außenumfang eine Rändelung 59 angebracht ist, um die Buchse 50 auch ohne Werkzeug verstellen zu können.

Die rechte Darstellung der Figur 5 zeigt eine Untenansicht mit der Stirnseite 58, dem Außengewinde 52, dem Absatz 53 und der Rändelung 59 sowie der zentrischen Durchgangsbohrung 12.

In der Figur 5a ist eine Variante der Buchse 50 gemäß Figur 5 gezeigt. Anstatt eines Absatzes 53 mit einer Rändelung 59 ist an der der dem zweiten Klemmteil gegenüberliegenden Stirnseite 58 abgewandten Seite der Buchse 50 ein Formschlusselement 54 in Gestalt eines Schlitzes angeordnet, so dass über einen Schraubendreher eine Verstellbarkeit der Buchse 50 relativ zu dem ersten Klemmteil 10 erfolgen kann. Die Buchse 50 kann somit nach Art einer Madenschraube vollständig in das erste Klemmteil 10 eingeschraubt werden, ohne dass eine Begrenzung durch den Absatz gegeben ist.

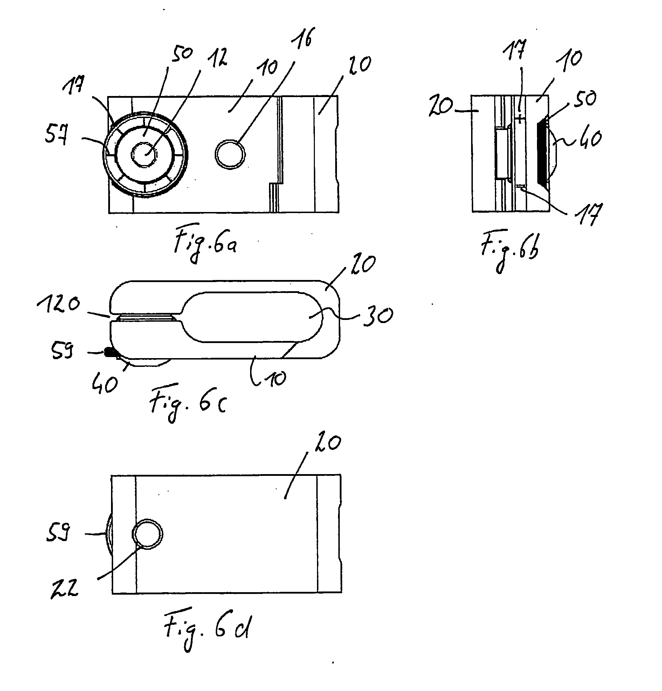

In den Figuren 6a bis 6d sind verschiedene Ansichten der Klemmvorrichtung gemäß Figur 2a dargestellt. In der Figur 6a ist zu erkennen, dass der Absatz 53 mit der Rändelung 59 über den Rand des ersten Bauteils 10 hinaussteht, so dass an der Schmalseite der Vorrichtung ein Überstand vorhanden ist, der eine leichte Einstellbarkeit der Buchse 50 ermöglicht. Ebenfalls sind die Markierungen 57 auf der Buchse 50 sowie 17 auf dem ersten Klemmteil 10 zu erkennen. Die Figur 6b zeigt weitere Markierungen 17 an der Schmalseite des ersten Klemmteils 10. Durch die Markierungen 17 wird eine Vergrößerung bzw. Verringerung des Abstandes des Klemmspaltes 120 angezeigt.

Die Figur 6c zeigt die Klemmvorrichtung 1 in einer Seitenansicht mit dem Freiraum 30, dem Klemmspalt 120 und der Klemmschraube 40. Die Figur 6d zeigt eine Untenansicht der Klemmvorrichtung 1, in der das zweite Klemmteil 20 mit dem Innengewinde 22 und dem überstehenden Rand der Buchse 50 mit der Rändelung 59 zu erkennen ist.

## Patentansprüche

1. Klemmvorrichtung mit einem ersten Klemmteil (10) und einem zweiten Klemmteil (20), zwischen denen ein Freiraum (30) zur Aufnahme eines zu klemmenden Objektes (6) und ein Klemmspalt (120) ausgebildet ist, sowie zumindest einer Klemmschraube (40), über die die Klemmteile (10, 20) zueinander verlagerbar sind, wobei in dem ersten Klemmteil (10) die Klemmschraube (40) in einer Durchgangsbohrung (12) geführt ist und in dem zweiten Klemmteil (20) ein zu der Klemmschraube (40) korrespondierendes Gewinde (22) vorgesehen ist, **dadurch gekennzeichnet, dass** die Durchgangsbohrung (12) in einer verlagerbar in dem ersten Klemmteil (10) gelagerten Buchse (50) ausgebildet ist.

2. Klemmvorrichtung nach Anspruch 1, **dadurch gekennzeichnet, dass** die Buchse (50) in Längserstreckung der Klemmschraube (40) verlagerbar in dem ersten Klemmteil (10) angeordnet ist.

3. Klemmvorrichtung nach Anspruch 1 oder 2, **dadurch gekennzeichnet, dass** die Buchse (50) ein Außengewinde (52) aufweist, das in ein korrespondierendes Innengewinde (15) in dem ersten Klemmteil (10) eingreift.

4. Klemmvorrichtung nach einem der voranstehenden Ansprüche, **dadurch gekennzeichnet, dass** in der Buchse (50) Formschlusselemente (54) zur Aufnahme von Verstellelementen vorgesehen sind.

5. Klemmvorrichtung nach einem der voranstehenden Ansprüche, **dadurch gekennzeichnet, dass** die Buchse (50) in den Klemmspalt (120) hineinragt und ein Widerlager für das zweite Klemmteil (20) bildet.

6. Klemmvorrichtung nach einem der voranstehenden Ansprüche, **dadurch gekennzeichnet, dass** die Klemmteile (10, 20) separat ausgebildet sind.

7. Klemmvorrichtung nach einem der Ansprüche 1 bis 5, **dadurch gekennzeichnet, dass** die Klemmvorrichtung (1) einstückig ausgebildet ist.

8. Klemmvorrichtung nach einem der voranstehenden Ansprüche, **dadurch gekennzeichnet, dass** an der dem zweiten Klemmteil (20) zugewandten Stirnseite (58) der Buchse (50) eine der Oberfläche (28) des zweiten Klemmteils (20) angepasste Oberfläche (56) ausgebildet ist.

9. Klemmvorrichtung nach einem der voranstehenden Ansprüche, **dadurch gekennzeichnet, dass** die Buchse (50) verschwenkbar in dem ersten Klemmteil (10) gelagert ist.

10. Klemmvorrichtung nach einem der voranstehenden Ansprüche, **dadurch gekennzeichnet, dass** an zumindest einem der Klemmteile (10, 20) ein Anschlusselement (60) oder eine Befestigungseinrichtung (16) für ein Anschlusselement (60) angeordnet oder ausgebildet ist.

11. Klemmvorrichtung nach einem der voranstehenden Ansprüche, **dadurch gekennzeichnet, dass** an der Buchse (50) und dem ersten Klemmteil (10) je zumindest eine Markierung (17, 57) angeordnet ist, über die die Stellung der Buchse (50) ablesbar ist.

12. Klemmvorrichtung nach einem der voranstehenden Ansprüche, **dadurch gekennzeichnet, dass** die Buchse (50) mit einer Rändelung (59) versehen ist.
